# EUROPEAN PATENT APPLICATION

(11) **EP 4 686 011 A1**
(43) Date of publication of application: **28.01.2026**
(21) Application number: 25191151.7
(22) Date of filing: 23.07.2025
(51) Int. Cl.: H01R 33/05, H01R 9/24

(54) **ASSEMBLY FOR CONNECTING A LIGHTING APPARATUS**

(30) Priority: 24.07.2024 BE 202405485
(71) Applicant: Delta Light NV, 8560 Wevelgem (Moorsele) (BE)
(72) Inventor: AMELOOT, Peter, 8560 Wevelgem (BE); DEQUAE, Koen, 8560 Wevelgem (BE); GAEREMYNCK, Stefaan Patrick, 8560 Wevelgem (BE)
(74) Representative: Arnold & Siedsma

(57) **Abstract**

Assembly for fixing or hanging a lighting apparatus on or in a wall, such as a ceiling, wherein the assembly comprises: a housing (100) mountable in the wall, a socket module (200) which is fixable in the housing and is removable from the housing from the side of the lighting apparatus, wherein the socket module is provided with electrical socket contacts (210a, 210b) and, connected thereto, electrical connection elements (220) which, in the mounted position, protrude into the wall and are configured to be electrically connected to the mains electricity, a plug module (300) which can be plugged into the socket module, wherein the plug module is provided with electrical plug contacts (310a, 310b), wherein in the plugged state the socket contacts make contact with the plug contacts, which plug module is fixable to the lighting apparatus.

## Description

### Field of the invention

The present invention relates to an assembly for an electrical apparatus, particularly for forming a light fixture, more particularly an apparatus intended to be hung or fixed on or in a wall, such as a wall or ceiling of a space in a building.

### Background

Light fixtures are typically provided on a wall, such as a ceiling or a wall, in a closed or semi-closed space. Light fixtures are often assembled from different components, wherein a connection is made between an electrical cable, which is typically installed in the wall, and the light source of the light fixture in order to provide power to this light source.

In existing systems a socket module is fixed in the wall, wherein the socket module is provided with an external screw thread and with an outward extending flange which is intended to extend against the wall around an opening, wherein a nut is tightened onto the external screw thread behind the wall. This has the drawback that the socket module can no longer be removed after tightening of the nut, unless there is still access behind the ceiling.

According to another existing system, the socket module is provided with an outward extending flange which is fixed in the wall by means of screws and/or plaster and thus is likewise no longer accessible after finishing of the installation.

### Summary

The object of embodiments of the invention is to provide an assembly for fixing or hanging an electrical apparatus, such as a lighting apparatus, on or in a wall, such as a ceiling, wherein the connection to the mains electricity can be inspected and maintained from the side of the electrical apparatus after installation, without access behind the wall being necessary.

According to a first aspect, an assembly is provided for fixing or hanging an electrical apparatus, such as a lighting apparatus, on or in a wall, such as a ceiling, wherein the assembly comprises a housing, a socket module and a plug module. The housing can be mounted at least partially in the wall. The socket module is fixable in the housing and is removable from the housing from the side of the electrical apparatus, wherein the socket module is provided with electrical socket contacts and, connected thereto, electrical connection elements which, in the mounted position, protrude into the wall. Preferably, the electrical connection elements protrude from the housing or are easily accessible from the outside of the housing. More preferably, the electrical connection elements protrude from the housing at an end of the housing opposite the end through which the plug module is insertable. The electrical connection elements are configured to be electrically connected to the mains electricity. The plug module can be plugged into the socket module and is provided with electrical plug contacts, wherein in the plugged state the socket contacts make contact with the plug contacts. The plug module is fixable to the electrical apparatus.

Providing such a plug and socket system, wherein the socket module is fixable in housing in the wall, enables the connection to the mains electricity, which is formed in the wall between the connection elements of the socket module and the grid, to be inspected and maintained following installation without access behind the wall being necessary. Indeed, the socket module can be pulled out of the wall and the connection between the connection elements and the wires of the mains circuitry can be inspected easily. Regulations in most countries (see for instance in the US: National Electrical Code §300.15 and §334.40(B), in Canada: Canadian electrical Code Rule 12-3000 and Rule 12-3032, in Belgium: AREI Article 198, in Germany: DIN VDE 0100-520) prohibit the use of electrical connections which are no longer accessible after finishing of the installation, and these regulations can be complied with with assemblies according to the invention.

Preferably, the housing comprises a tube in which the socket module is receivable, and the tube is provided with an outward protruding flange which is fixable against the wall or can be plastered into the wall. The housing can thus be provided permanently in the wall, while the socket module is removable and can thus be inspected in simple manner.

The flange is preferably provided with holes for receiving screws and/or holes for receiving plaster.

The socket module is preferably fixable in the housing using a spring, wherein the spring is removable from the side of the electrical apparatus. Such an embodiment allows the housing and socket module to take a very compact and robust form. For the purpose of receiving the spring the housing can be provided on its inner wall with a channel in which the spring can be clampingly received. The socket module is arranged first, and is locked using the spring. In order to remove the socket module the spring is removed first, and then the socket module.

The spring can thus be removed along the user side, whereby the socket can be removed from the ceiling portion and whereby the connections can be inspected or maintained.

According to another embodiment, the socket module is fixable in the housing by clips or by clamps or by a bayonet connection, wherein the socket module is preferably provided with clipping elements or clamping elements or bayonet elements. This can likewise provide a good solution, particularly for assemblies that need not be as compact

According to yet another embodiment, the socket module is provided with a screw thread, for instance an external screw thread, and the housing is provided with a complementary screw thread, for instance an internal screw thread, intended to co-act with the screw thread of the socket module.

The socket contacts and the plug contacts are preferably cylindrical. This allows the plug module to be pluggable into the socket module in any desired position and to be rotated.

The plug module is preferably provided with a mechanical coupling means which is configured to be coupled to the socket module. In some embodiments the electrical socket contacts and plug contacts can also function as mechanical connecting elements, but in an embodiment a separate mechanical coupling means is provided which is configured to be able to bear the weight of the electrical apparatus. In an advantageous embodiment the mechanical coupling means is a substantially barrel-shaped spring element which is provided on an outer periphery of the plug module, and an inner wall of the socket module is configured to hold the barrel-shaped spring element mechanically. Such a spring element allows the plug module to be pluggable into the socket module in any desired position and to be rotated. The barrel-shaped spring element can optionally also function as one of the electrical plug contacts, for instance for the purpose of sending a control signal to a converter arranged in the plug module or in the lighting apparatus.

The connection elements of the socket module preferably comprise at least two snap-in connectors, which are each configured to clampingly receive an outer end of an electric wire. This allows the necessary electrical connections to the grid to be realized quickly. According to an alternative, the connection elements of the socket module comprise at least two electric wires.

The socket module preferably comprises a substantially tubular housing and, received therein, a connector module which is provided with the socket contacts at an end situated in the housing and is provided with the connection elements at another end situated outside the housing.

The housing, the socket module and the plug module are preferably substantially cylindrical.

The electrical apparatus preferably comprises at least one light-emitting diode, LED, preferably an array of light-emitting diodes.

**In** a possible embodiment the electrical apparatus is a lighting apparatus with a light source, and the assembly comprises a converter is configured to convert a supply voltage, for instance an AC or DC voltage, into one or more current or voltage signals suitable for powering the light source, and preferably for driving the at least one LED. The converter can optionally be configured to receive one or more control signals, such as a dimming signal or a light colour control signal, and to control the current or voltage signal in accordance with the one or more control signals.

The converter can optionally be provided in the socket module.

According to an alternative, the converter can be provided in the plug module or in the lighting apparatus, and three or more socket contacts and three or more plug contacts are provided. One or more control signals can hereby be sent to the converter in the plug module or in the lighting apparatus, for instance in order to dim the light source and/or to control a colour of the emitted light (for instance tunable white).

Optionally the tube of the housing may be provided with an external screw thread intended to cooperate with an internal screw thread of a mounting part arranged partially in the wall.

According to yet another aspect, an assembly is provided for fixing or hanging an electrical apparatus, such as a lighting apparatus, on or in a wall, such as a ceiling, wherein the assembly comprises a socket module and a plug module. The socket module is mountable in the wall and has an outward protruding flange which is fixable against the wall from the side of the electrical apparatus, wherein the socket module is provided with electrical socket contacts and, connected thereto, electrical connection elements which protrude into the wall and are configured to be electrically connected to the mains electricity. The plug module can be plugged into the socket module, wherein the plug module is provided with electrical plug contacts, wherein in the plugged state the socket contacts make contact with the plug contacts. The plug module is fixable to the electrical apparatus, preferably at least by means of an electrical cable.

The outward protruding flange is preferably provided with screw holes so that the flange can be fixed against a wall using screws.

The socket contacts and the plug contacts are preferably cylindrical. **In** another possible embodiment the socket contacts and the plug contacts can be arranged around a prism-shaped jacket. **In** this way it can be ensured that the plug module is only pluggable into the socket module in a determined position and alignment of the plug module in the socket module can be realized.

The plug module is preferably provided with a mechanical coupling means which is configured to be coupled to the socket module, for instance a substantially barrel-shaped spring element. An inner wall of the socket module can then be configured to hold the barrel-shaped spring element mechanically. The barrel-shaped spring element can optionally also function as one of the electrical plug contacts, for instance for the purpose of sending a control signal to a converter arranged in the plug module or in the lighting apparatus.

The connection elements of the socket module preferably comprise at least two snap-in connectors, which are each configured to clampingly receive an outer end of an electric wire.

The socket module preferably comprises a substantially tubular housing and, received therein, a connector module, which connector module is provided with the socket contacts at an end situated in the housing and is provided with the connection elements at another end situated outside the housing.

The socket module and the plug module are preferably substantially cylindrical.

Advantageous features described above for the first aspect likewise apply to embodiments according to the second aspect of the invention, and vice versa.

A third aspect of the invention concerns a wall assembly with a housing, preferably a housing in which a socket module can be received as described above. The wall assembly may have the features of any one of the following clauses:
1. A wall assembly comprising a mounting plate (520), a tubular mounting part (510) having an internal screw thread (515), and a housing (100) having a corresponding external screw thread (115).
2. The wall assembly of clause 1, further comprising a socket module which is fixable in the housing and is removable from the housing from the side of the electrical apparatus, wherein the socket module is provided with electrical socket contacts (210a, 210b) and, connected thereto, electrical connection elements (220) which, in the mounted position, protrude into the wall, said electrical connection elements (220) being configured to be electrically connected to the mains electricity.
3. The wall assembly of clause 2, further comprising a plug module (300) which can be plugged into the socket module, wherein the plug module is provided with electrical plug contacts (310a, 310b), wherein in the plugged state the socket contacts make contact with the plug contacts, which plug module is fixable to the electrical apparatus.
4. The wall assembly according to any one of the previous clauses, wherein the housing comprises a tube (110) and the tube is provided with an outward protruding flange (120, 125) which is fixable against the wall and/or can be plastered into the wall.
5. The wall assembly according to clause 4, wherein the flange (120) is provided with holes (121) for receiving screws and/or with holes (122) for receiving plaster.
6. The wall assembly according to clause 2, wherein the socket module (200) is fixable in the housing (100) using a spring (250), wherein the spring is removable from the side of the electrical apparatus; or wherein the socket module (200) is fixable in the housing (100) by clips or by clamps or by a bayonet connection, wherein the socket module is preferably provided with clipping elements (255) or clamping elements or bayonet elements (260); or wherein the socket module (200) is provided with an external screw thread and the housing (100) is provided with an internal screw thread intended for co-action with the external screw thread.
7. The wall assembly according to clause 2 or 6, wherein the socket contacts (210a, 210b) and the plug contacts (310a, 310b) are cylindrical.
8. The wall assembly according to clause 3, wherein the plug module (300) is provided on its outer periphery with a substantially barrel-shaped spring element (330) and an inner wall of the socket module is configured to hold the barrel-shaped spring element mechanically, wherein the barrel-shaped spring element optionally also functions as one of the electrical plug contacts (310a, 310b).
9. The wall assembly according to clause 2 or 6 or 7, wherein the connection elements (220) of the socket module comprise at least two snap-in connectors (225), which are each configured to clampingly receive an outer end of an electric wire or wherein the connection elements (220) of the socket module comprise at least two electric wires (226).
10. The wall assembly according to clause 2 or 6 or 7 or 9, wherein the socket module comprises a substantially tubular housing and, received therein, a connector module, which connector module is provided with the socket contacts at an end situated in the housing and is provided with the connection elements at another end.
11. The wall assembly according to clause 3, wherein the housing, the socket module and the plug module are substantially cylindrical.
12. The wall assembly according to clause 3, further comprising a lighting apparatus connected to the plug module, preferably a lighting apparatus with at least one light-emitting diode, LED, preferably an array of light-emitting diodes; optionally further comprising a converter which is configured to convert a supply voltage into one or more current or voltage signals suitable for powering the lighting apparatus; wherein preferably the converter is provided in the socket module.
13. The wall assembly according to clause 12, wherein the converter is configured to receive one or more control signals, such as a dimming signal or a light color control signal, and to control the current or voltage signal in accordance with the one or more control signals, and wherein the electrical socket contacts (210a, 210b) comprise at least three electrical socket contacts (210a, 210b) and the electrical plug contacts (310a, 310b) comprise at least three electrical plug contacts (310a, 310b).

The wall assembly of clause 1 above allows the housing to be arranged at a suitable height by rotating the housing in a desired position in the tubular mounting part.

A fourth aspect of the invention concerns a housing for an assembly for providing an electrical apparatus to a wall, preferably an assembly according to the first aspect. The housing may have the features of any one of the following clauses:
1. A housing (100) comprising a tubular part (110) in which a module, such as a socket module (200) is receivable, wherein said tubular part (110) is provided with a lower flange (125) and an upper flange (126); said housing further comprising a plurality of screws (140a, 140b) extending through the lower flange (125) and the upper flange (126), and a plurality of corresponding wing elements (145a, 145b) between the lower flange 125 and the upper flange 126, each screw being threadedly coupled with a corresponding wing element (145a, 145b), such that by rotating a screw thereof, the position of the corresponding wing element relative to the screw is changed.
2. The housing of clause 1, wherein the plurality screws (140a, 140b) are provided with respective screw heads (141a, 141b) which are accessible at the lower side of the lower flange (125).
3. The housing of clause 1 or 2, wherein each wing element is configured such that a wall element W may be clamped between the wing element and the lower flange (125).
4. The housing of any one of the previous clauses, further comprising a housing cover (150) configured to be arranged from the outside over the lower flange once the housing has been installed in the wall with the plurality of wing elements in a clamping position.
5. A housing comprising a tubular part (110) with a conical inner wall (111) and two slits (112) located on opposite sides of the tubular part, such that said tubular part is expandable by pulling a part (117) with a conical outer wall (118) through said tubular part (110).
6. A wall assembly comprising a housing (100) according to any one of the previous clauses, further comprising a socket module which is fixable in the housing and is removable from the housing from the side of the electrical apparatus, wherein the socket module is provided with electrical socket contacts (210a, 210b) and, connected thereto, electrical connection elements (220) which, in the mounted position, protrude into the wall, said electrical connection elements (220) being configured to be electrically connected to the mains electricity.
7. The wall assembly of clause 6, further comprising a plug module (300) which can be plugged into the socket module, wherein the plug module is provided with electrical plug contacts (310a, 310b), wherein in the plugged state the socket contacts make contact with the plug contacts, which plug module is fixable to the electrical apparatus.
8. The wall assembly according to any one of the clauses 6-7, wherein the housing comprises a tube (110) and the tube is provided with an outward protruding flange (120, 125) which is fixable against the wall and/or can be plastered into the wall.
9. The wall assembly according to clause 8, wherein the flange (120) is provided with holes (121) for receiving screws and/or with holes (122) for receiving plaster.
10. The wall assembly according to clause 6, wherein the socket module (200) is fixable in the housing (100) using a spring (250), wherein the spring is removable from the side of the electrical apparatus; or wherein the socket module (200) is fixable in the housing (100) by clips or by clamps or by a bayonet connection, wherein the socket module is preferably provided with clipping elements (255) or clamping elements or bayonet elements (260); or wherein the socket module (200) is provided with an external screw thread and the housing (100) is provided with an internal screw thread intended for co-action with the external screw thread.
11. The wall assembly according to clause 6 or 10, wherein the socket contacts (210a, 210b) and the plug contacts (310a, 310b) are cylindrical.
12. The wall assembly according to clause 7, wherein the plug module (300) is provided on its outer periphery with a substantially barrel-shaped spring element (330) and an inner wall of the socket module is configured to hold the barrel-shaped spring element mechanically, wherein the barrel-shaped spring element optionally also functions as one of the electrical plug contacts (310a, 310b).
13. The wall assembly according to clause 6 or 10 or 11 or 12, wherein the connection elements (220) of the socket module comprise at least two snap-in connectors (225), which are each configured to clampingly receive an outer end of an electric wire or wherein the connection elements (220) of the socket module comprise at least two electric wires (226).
14. The wall assembly according to clause 2 or any one of clauses 10-13, wherein the socket module comprises a substantially tubular housing and, received therein, a connector module, which connector module is provided with the socket contacts at an end situated in the housing and is provided with the connection elements at another end.
15. The wall assembly according to clause 7, wherein the housing, the socket module and the plug module are substantially cylindrical.
16. The wall assembly according to clause 7, further comprising a lighting apparatus connected to the plug module, preferably a lighting apparatus with at least one light-emitting diode, LED, preferably an array of light-emitting diodes; optionally further comprising a converter which is configured to convert a supply voltage into one or more current or voltage signals suitable for powering the lighting apparatus; wherein preferably the converter is provided in the socket module.
17. The wall assembly according to clause 16, wherein the converter is configured to receive one or more control signals, such as a dimming signal or a light color control signal, and to control the current or voltage signal in accordance with the one or more control signals, and wherein the electrical socket contacts (210a, 210b) comprise at least three electrical socket contacts (210a, 210b) and the electrical plug contacts (310a, 310b) comprise at least three electrical plug contacts (310a, 310b).

The housing of clause 1 above, allows the housing to be fixed in a through-hole of a wall board, such as a Gyproc board, in a simple and robust manner without the need for arranging screws in the wall boards.

The housing of clause 5 allows the housing to be fixed in a solid wall, such as a concrete wall.

### Brief description of the figures

The invention will now be further described on the basis of figures of a number of by no means limitative exemplary embodiments, wherein the figures are purely illustrative.
Figure 1A shows a perspective view of an embodiment of an assembly for hanging or fixing a lighting apparatus in a wall.
Figure 1B shows a perspective view of the socket module of the assembly of Figure 1A.
Figure 1C shows a cross-section of the socket module of the assembly of Figure 1A.
Figure 1D shows a cross-section of the plug module of the assembly of Figure 1A.
Figure 1E shows a cross-section of the plug module of the assembly of Figure 1A plugged into the socket module.
Figure 2 shows a perspective view of another embodiment of an assembly for hanging or fixing a lighting apparatus in a wall.
Figure 3A shows a perspective view of another embodiment of an assembly for hanging or fixing a lighting apparatus in a wall, wherein the plug module is not shown but can be the same as that of Figure 1A. Figure 3B shows a cross-section of the socket module of Figure 3A.
Figure 4 shows a perspective view of another embodiment of an assembly for hanging or fixing a lighting apparatus in a wall.
Figure 5A shows a perspective view of another embodiment of an assembly for hanging or fixing a lighting apparatus in a wall, wherein the housing into which the socket module is screwable is not shown. Figure 5B shows a cross-section of the socket module of Figure 5A.
Figure 6A shows a perspective view of another embodiment of an assembly for hanging or fixing a lighting apparatus in a wall, wherein no housing is provided. Figure 6B shows a top view and figures 6C and 6D show cross-sections of the socket module of Figure 6A.
Figure 7A is an exploded perspective view of a mounting assembly configured for receiving housing of an assembly for providing a lighting apparatus to a wall, typically a concrete wall. Figure 7B shows the assembly of Figure 7A in the mounted state.
Figure 8A is an exploded perspective view of a mounting assembly configured for receiving housing of an assembly for providing a lighting apparatus to a wall, typically a gypsum board, a drywall, or plasterboard wall. Figure 8B shows the assembly of Figure 8A in the mounted state.
Figure 9A shows a perspective exploded view of another embodiment of an assembly for providing a lighting apparatus to a wall.
Figure 9B shows a perspective view of the housing of the assembly of Figure 9A.
Figure 9C shows a cross-section of the housing of the assembly of Figure 9A.
Figure 10A is a perspective view of another embodiment of a housing which can be fixed in a wall, typically a concrete wall. Figure 10B shows a cross section of the housing of Figure 10A with a mounting tool arranged to fix the housing in the wall. Figures 10C and 10D show perspective views of the two housings parts of the housing of Figure 10A separately.
Figure 11 is a perspective view of another embodiment of a housing which can be fixed in a wall, typically a concrete wall.

### Brief description of the figures

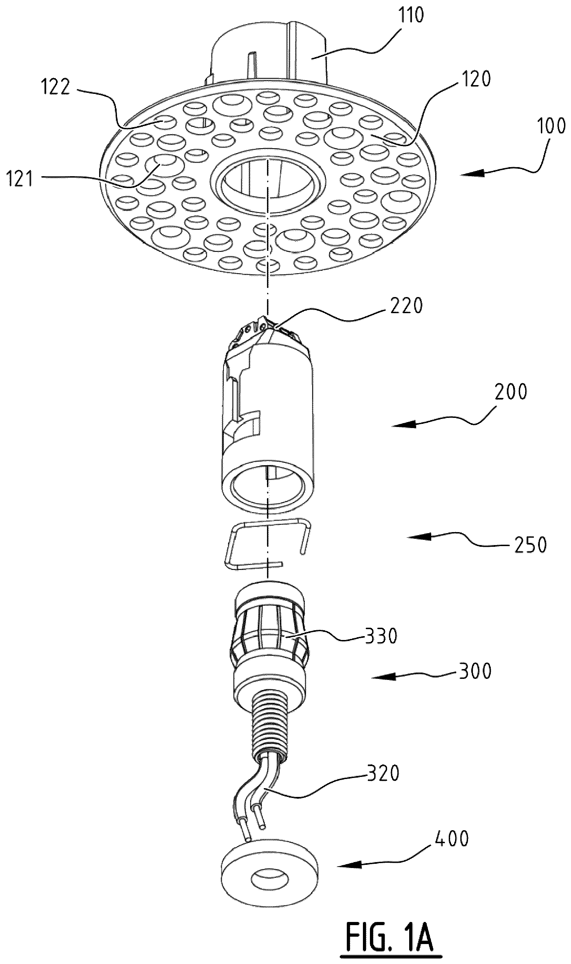

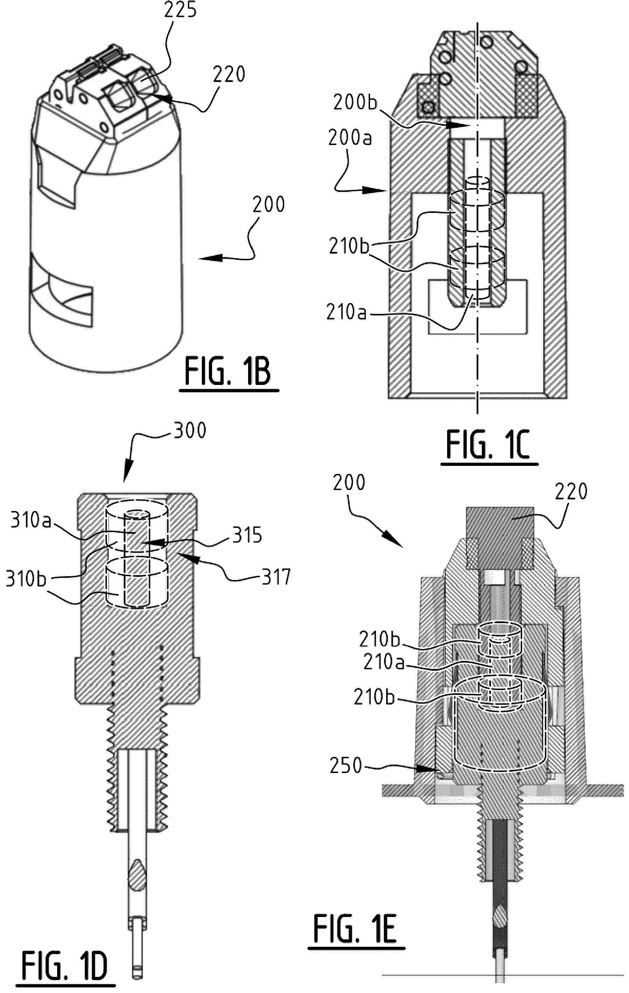

Figures 1-6 show different embodiments of assemblies for providing an electrical apparatus, typically a lighting apparatus, on or in a wall W, such as a ceiling (mount-in or mount-on).

In the embodiment of Figures 1-5 the assembly comprises a housing 100, a socket module 200, a plug module 300 connectable to the lighting apparatus, and an optional protective cover 400. The housing 100 is fixable in the wall. The housing 100 comprises a tube 110 in which the socket module 200 is receivable, and the tube 110 is provided with an outward protruding flange 120 which is fixable against the wall using screws, and/or can be plastered into the wall, around an opening in the wall. The flange 120 is provided with holes 121 for receiving screws and/or with holes 122 for receiving plaster.

The socket module 200 is fixable in the housing and removable from the housing from the side of the electrical apparatus. The socket module 200 is provided with electrical socket contacts 210a, 210b (see Figures 1C and 1E) and, connected thereto, electrical connection elements 220 which protrude into the wall and preferably from the housing 100 and are configured to be electrically connected to the mains electricity.

The plug module 300 can be plugged into the socket module and is provided with electrical plug contacts 310a, 310b (see Figure 1D), wherein in the plugged state the socket contacts 210a, 210b make contact with the plug contacts 310a, 310b. The plug module 300 is fixable to the electrical apparatus (not shown), typically at least by means of an electrical cable 320.

The socket contacts 210a, 210b and the plug contacts 310a, 310b are preferably cylindrical. Figures 1C, 1D and 1E show schematically several possible locations of the socket contacts 210a, 210b and the plug contacts 310a, 310b in broken lines. A central pin 315 of the plug module 300 can be provided with one or more cylindrical plug contacts 310a and/or a cylindrical wall 317 of the plug module 300 lying therearound can be provided with one or more cylindrical plug contacts 310b. Similarly, the socket module can be provided with one or more complementary cylindrical socket contacts 210a and/or one or more complementary cylindrical socket contacts 210b.

The plug module 300 is preferably provided with a mechanical coupling means which is configured to be coupled to the socket module. In the illustrated embodiments the plug module 300 is provided on its outer periphery with a substantially barrel-shaped spring element 330 and an inner wall of the socket module is configured to hold the barrel-shaped spring element mechanically. The barrel-shaped spring element 330 can optionally also function as one of the electrical plug contacts, for instance for the purpose of sending a control signal to a converter arranged in the plug module 300 or in the lighting apparatus.

The socket module 200 comprises a substantially tubular socket housing 200a and a connector module 200b accommodated therein, see Figures 1B, 1C and 1E. The connector module 200b is provided with the socket contacts 210a, 210b at an end situated in the socket housing 200a and provided with the connection elements 220 at another end situated outside the housing.

The housing 100, the socket module 200 and the plug module 300 are preferably substantially cylindrical.

In the illustrated embodiments of Figures 1, 2, 4 and 5 the connection elements 220 of the socket module comprise at least two snap-in connectors 225, which are each configured to clampingly receive an outer end of an electric wire. In the shown embodiment two snap-in connectors 225 are placed adjacently of each other, although they can also be provided one above the other, particularly when more than two snap-in connectors 225 are used, as will for instance be the case if control signals must be sent to the lighting apparatus.

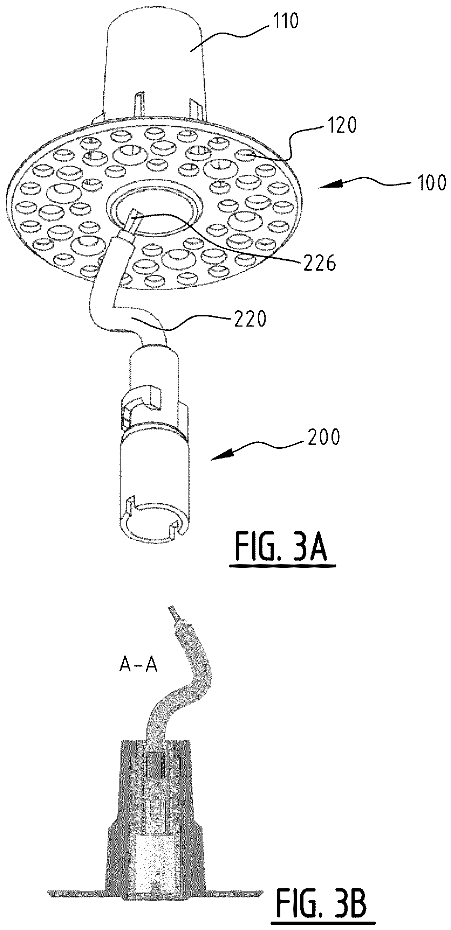

In the variant of Figures 3A-3B the connection elements 220 of the socket module comprise at least two electric wires 226.

In the variant of Figures 1A-1E the socket module 200 is fixable in the housing 100 using a spring 250, wherein the spring is removable from the side of the electrical apparatus.

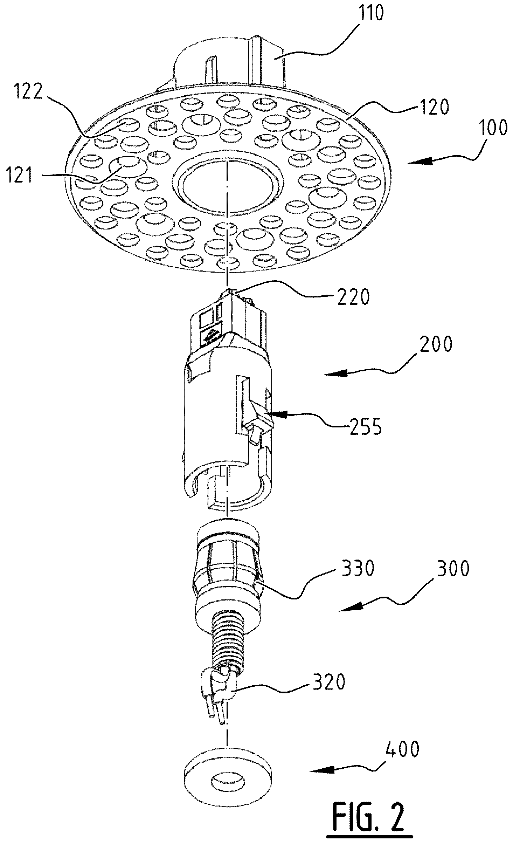

In the variant of Figure 2 the socket module 200 is fixable in the housing 100 by clips, wherein socket module 200 is provided with clipping elements 255 which are receivable in corresponding recesses in housing 100.

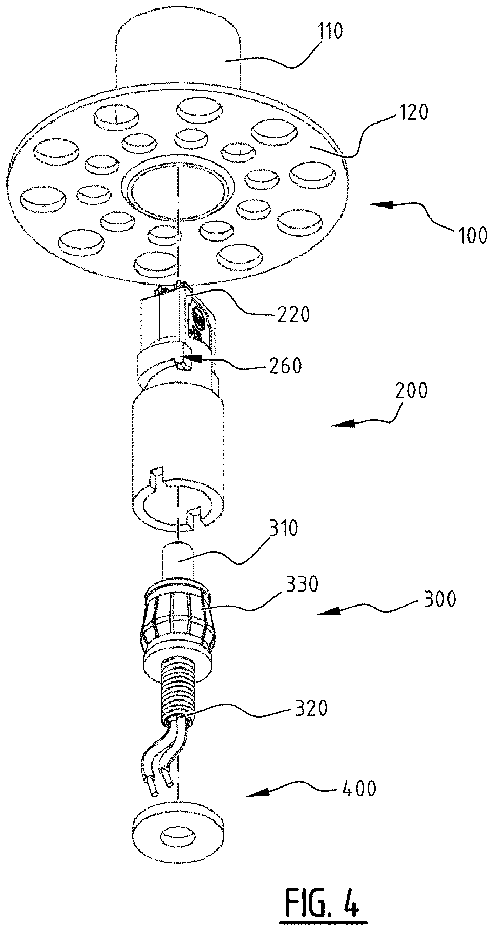

In the variant of Figure 4 the socket module 200 is fixable in the housing 100 by a bayonet connection, wherein socket module 200 is provided with bayonet elements 260.

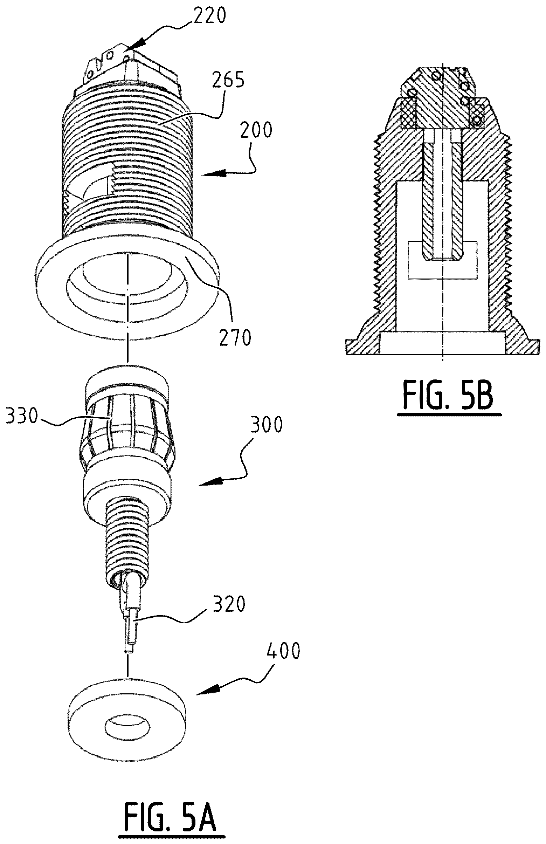

In the variant of Figures 5A-5B socket module 200 is provided with an external screw thread 265 and the housing (not shown) is provided with an internal screw thread intended to co-act with the external screw thread 265.

The electrical apparatus preferably comprises at least one light-emitting diode, LED, preferably an array of light-emitting diodes.

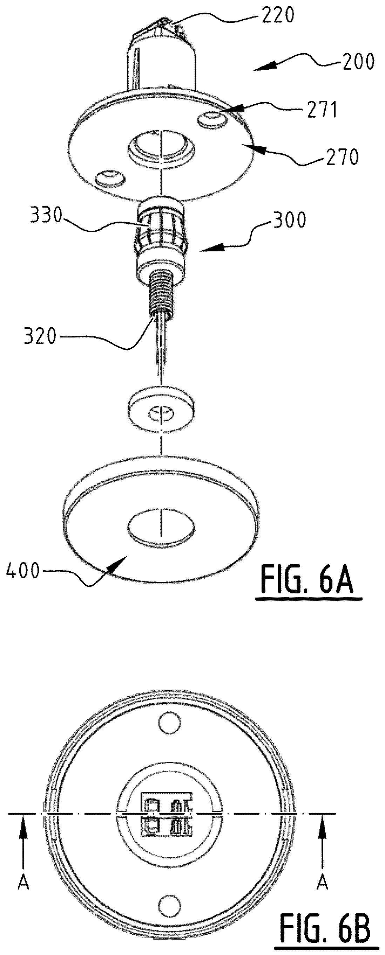

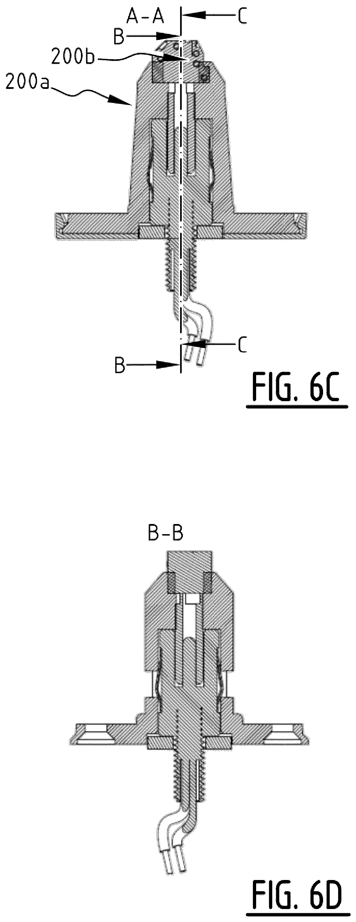

Figures 6A-6D illustrate yet another assembly for fixing or hanging an electrical apparatus, such as a lighting apparatus, on or in a wall, such as a ceiling, wherein the assembly comprises a socket module 200 and a plug module 300. The socket module 200 mountable in the wall has an outward extending flange 270 which is fixable against the wall from the side of the electrical apparatus. The outward protruding flange 270 is optionally provided with screw holes 271. The socket module 200 is provided with electrical socket contacts 210a, 210b and, connected thereto, electrical connection elements 220 which protrude into the wall and are configured to be electrically connected to the mains electricity. The plug module 300 which can be plugged into the socket module 200 can be identical to the above-described plug module. The socket contacts and the plug contacts are preferably cylindrical as described above.

The connection elements 220 of the socket module 200 preferably comprise at least two snap-in connectors, which are each configured to clampingly receive an outer end of an electric wire. The socket module 200 preferably comprises a substantially tubular socket housing 200a and, received therein, a connector module 200b, which connector module is provided with the socket contacts at an end situated in the socket housing 200a and is provided with the connection elements 220 at another end situated outside the socket housing 200a.

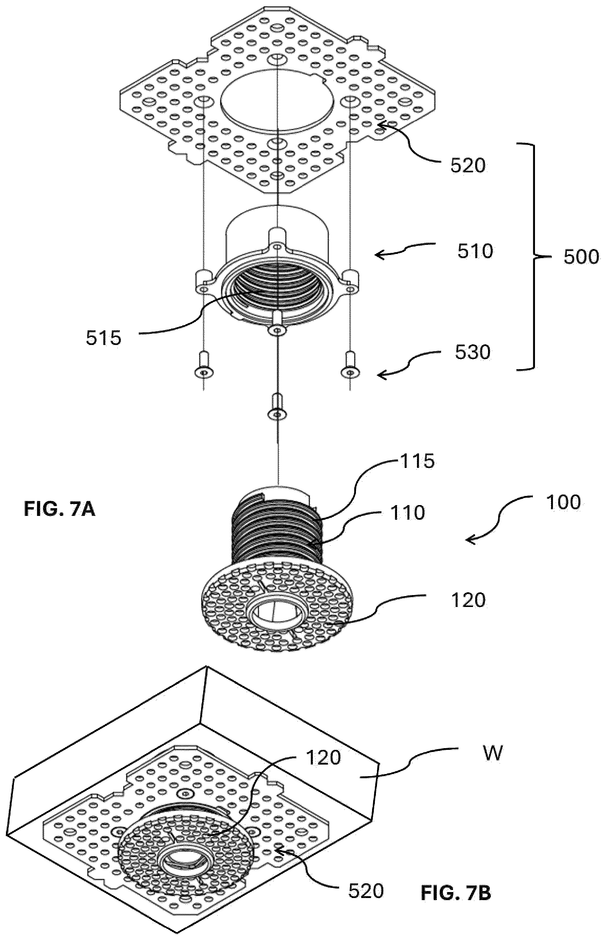

Figures 7A and 7B show a possibly housing 100 of an assembly for mounting an electrical apparatus to a wall W, typically a concrete wall W. The assembly may be an assembly as described above further comprising a socket module and a plug module connectable to the electrical apparatus.

The housing 100 comprises a tubular part 110 in which for example a socket module is receivable, and the tubular part 110 is provided with an outward protruding flange 120 which can be plastered into the wall, around an opening in the wall. The flange 120 is provided with holes for receiving plaster.

To arrange the housing 100 in a wall W there is provided a mounting assembly 500 comprising a mounting part 510, a mounting plate 520 and a plurality of screws 530. The housing 100 is received in the mounting part 510 which is arranged in a hole of a mounting plate 520 using the plurality of screws 530 which extend through holes in the mounting plate 520.

The tubular part 110 of the housing 100 is provided with an external screw thread 115 and the mounting part 510 is provided with a corresponding internal screw thread 515 so that the housing 100 can be screwed in the mounting part 510 in a desired position. In this embodiment, a hole is arranged in wall W, and the mounting plate 520 is arranged so that the hole in the mounting plate 520 corresponds with the hole in the wall. The mounting part 510 can thus be received in the hole in wall W through the mounting plate 520. Next, the housing 100 can be screwed in mounting part 510. The mounting plate 520 and the flange 120 are thus located at the same side of the wall.

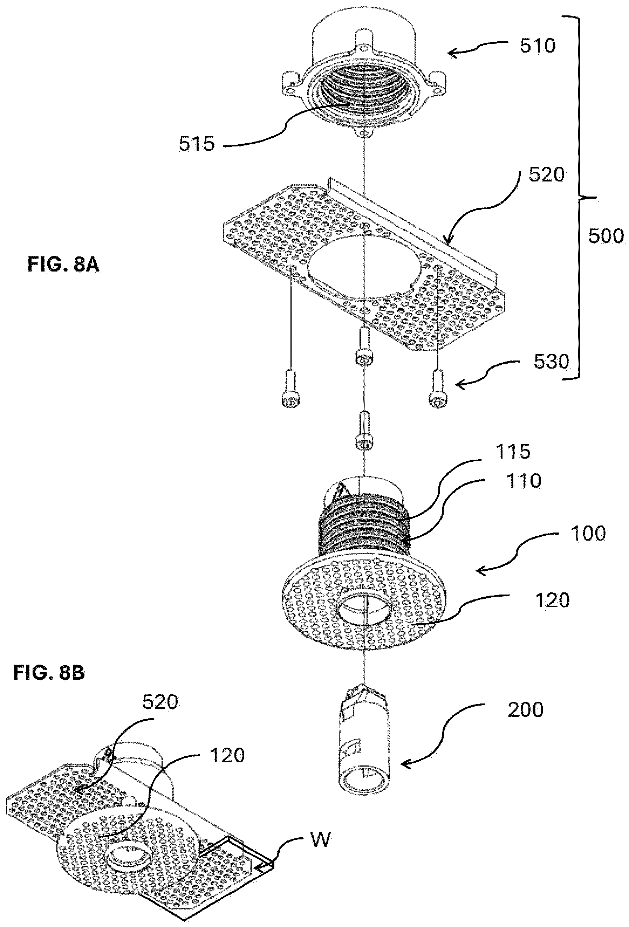

Figures 8A and 8B show a similar housing 100 of an assembly for mounting an electrical apparatus to a wall W, typically a gypsum board, a drywall, or plasterboard wall W, is shown. The assembly may be an assembly as described above further comprising a socket module 200 and a plug module (not shown) connectable to the electrical apparatus.

The housing 100 comprises a tubular part 110 in which for example a socket module is receivable, and the tubular part 110 is provided with an outward protruding flange 120 which can be plastered into the wall, around an opening in the wall. The flange 120 is provided with holes for receiving plaster.

To arrange the housing 100 in a wall W there is provided a mounting assembly 500 comprising a mounting part 510, a mounting plate 520 and a plurality of screws 530. The housing 100 is received in the mounting part 510 which is arranged above a hole of a mounting plate 520 using the plurality of screws 530 which extend through holes in the mounting plate 520. The tubular part 110 of the housing 100 is provided with an external screw thread 115 and the mounting part 510 is provided with a corresponding internal screw thread 515 so that the housing 100 can be screwed in the mounting part 510 in a desired position. In this embodiment, the mounting plate 520 and the mounting part 510 are typically located at one side of the wall, typically above or behind a Gyproc wall element, wherein a through-hole is arranged in the wall W, so that the housing 100 can be screwed from the other side of the wall W in the mounting part 510. The mounting plate 520 and the flange 120 are thus located on opposite sides of the wall element W.

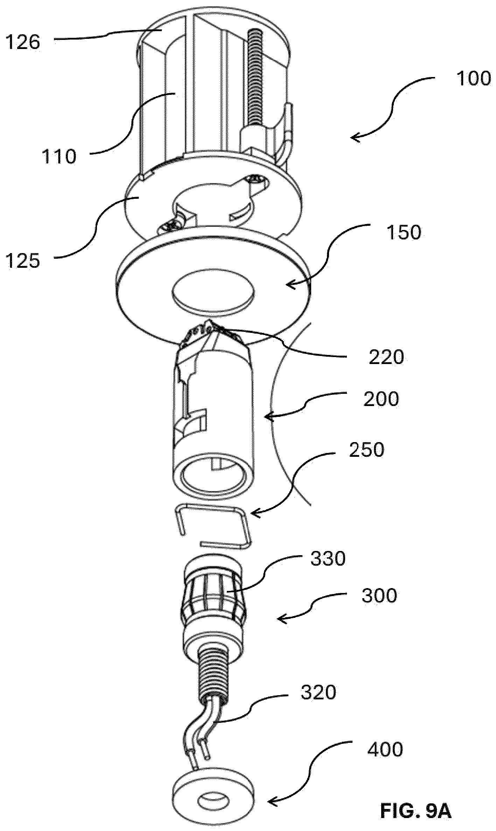

Figure 9A to 9C illustrate another embodiment of an assembly for providing a lighting apparatus to a wall.

In the embodiment of Figures 9A to 9C, the assembly comprises a housing 100, a socket module 200, a plug module 300 connectable to the lighting apparatus, and an optional protective cover 400. The housing 100 is fixable in the wall.

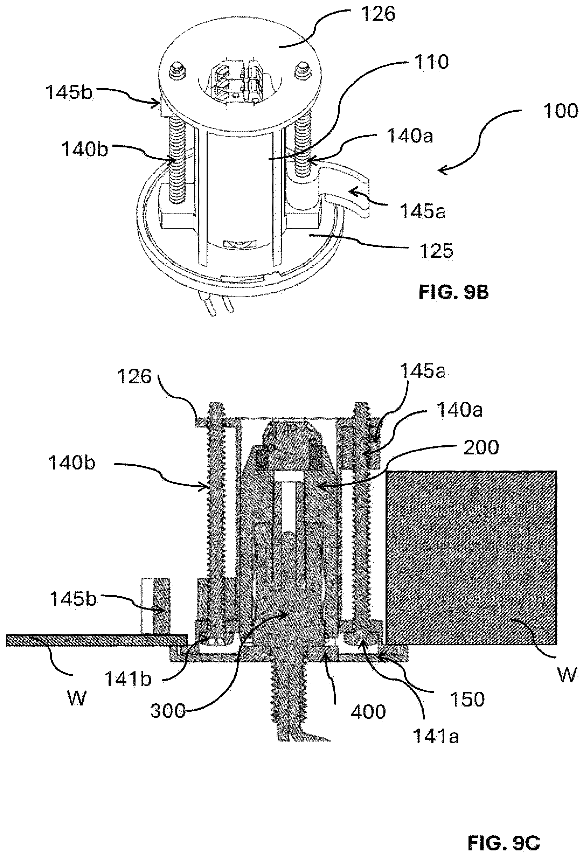

The housing 100 is shown in more detail in Figures 9B and 9C and comprises a tubular part 110 in which the socket module 200 is receivable. The tubular part 110 is provided with a lower flange 125 and an upper flange 126. Two screws 140a, 140b extend through the lower flange 125 and the upper flange 126 and each screw 140a, 140b is threadedly coupled with a corresponding wing element 145a, 145b between the lower flange 125 and the upper flange 126, such that by rotating the screw 140a, 1410b, the position of the respective wing element 145a, 145b relative to the screw 140a, 140b is changed. The screws 140a, 140b are provided with respective screw heads 141a, 141b which are accessible at the lower side of the lower flange 125, and are thus easily accessible for an installer. Figure 9C illustrates the left wing element 145b in the lowest possible position and the right wing element 145a is in the highest position. A wall element W may be clamped between the wing elements 145a, 145b and the lower flange 125 Obviously both wing elements 145a, 145b will typically be in substantially the same position as a wall element W typically has substantially the same thickness. Figure 9C illustrates wall elements of different thicknesses at the left and right side but this is merely for illustrative purpose; in practice the wall element W will have substantially the same thickness and the wing elements 145a, 145b will be in similar position.

The housing may further comprise a housing cover 150 configured to be arranged from the outside over the lower flange 125 once the housing has been installed in the wall W with the wing elements 145a, 145b in a clamping position. The protective cover 400 may fit in an opening of the housing cover. The housing cover 150 and/or the protective cover 400 may be fixed for example through a bayonet mechanism or a clamping mechanism.

The socket module 200 is fixable in the housing and removable from the housing from the side of the electrical apparatus. The socket module 200 is provided with electrical socket contacts (for example in a similar manner as described above for other embodiments) and, connected thereto, electrical connection elements 220. After mounting of the socket module 200 in the housing 100, the electrical connection elements 220 are accessible at the upper flange 126 of the housing 100 and are configured to be electrically connected to the mains electricity. Thus, in the mounted position, the electrical connection elements 220 protrude into the wall but they do not necessarily have to protrude from the housing 100 as long as they are accessible from the outside of the housing 100.

The plug module 300 can be plugged into the socket module and is provided with electrical plug contacts (for example as described above for other embodiments), wherein in the plugged state the socket contacts make contact with the plug contacts. The plug module 300 is fixable to the electrical apparatus (not shown), typically at least by means of an electrical cable 320.

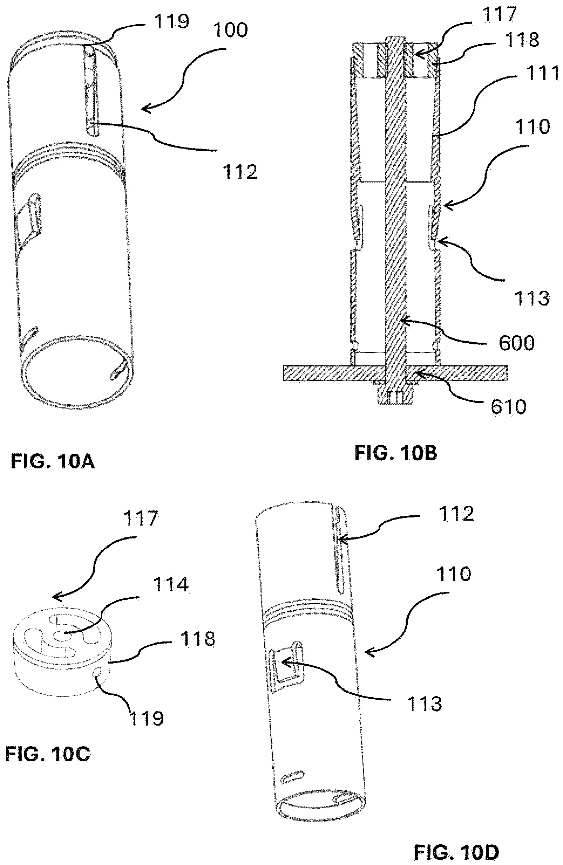

Figure 10A shows a housing which can be fixed in a wall, typically a concrete wall. The housing 100 comprises two housings parts 110, 117 shown separately in Figures 10C and 10D. Part 110 is a tubular part with a conical upper inner wall 111. Part 117 is an upper part with a conical outer wall 118. For mounting the housing in a hole of a wall, typically a concrete wall, the upper part 117 is pulled in the tubular part 110 so as to expand the tubular part 110 and fix the tubular part 110 in the wall. To this end the upper part 117 has a threaded hole 114 which is threadedly coupled to a mounting screw 600. The mounting screw 610 is part of a tool assembly 600, 610 used for pulling the lower part 117 downward so as to expand the tubular part 110. In order to prevent that the upper part 117 rotates, it may be provided with one or more pins 119 which are received in one or more respective slits 112 in the tubular part 110. Once the housing 100 is put in place the mounting assembly 600, 610 can be removed and the socket module 200 can be installed in the housing 100.

The tubular part 110 may be provided with inwardly extending protrusions configured to be coupled with the socket module so as to hold the socket module in place in the housing 100.

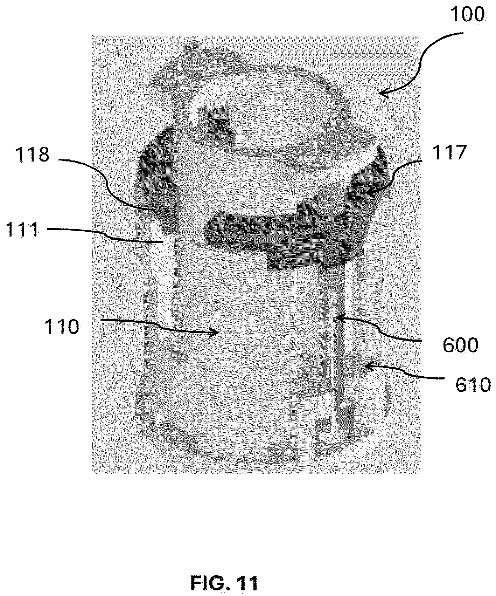

Figure 11 is a housing which uses a similar principle. The housing 100 comprises a tubular part 110 and an upper part 117. Tubular part 110 has a conical upper inner wall 111. Upper part 117 has a conical outer wall 118. For mounting the housing 100 in a hole of a wall, typically a hole in a concrete wall, the upper part 117 is pulled in the tubular part 110 so as to expand the tubular part 110 and fix the tubular part 110 in the wall. To this end the upper part 117 has two threaded holes 114 which are threadedly coupled to two mounting screws 600. The mounting screws 610 are used for pulling the lower part 117 downward so as to expand the tubular part 110.

The socket module and the plug module are preferably substantially cylindrical.

In determined embodiments of the invention the lighting apparatus is replaced with a different electrical apparatus, for instance a detection module such as a motion sensor, a light sensor, a smoke detector, an alarm module, a camera, a sound module and the like. An electrical apparatus can also combine several functions, for instance a lighting function and a sensor function.

The skilled person will appreciate that many variants and modifications can be envisaged within the scope of the invention, which is defined solely by the following claims.

## Claims

1. Assembly for fixing or hanging an electrical apparatus, such as a lighting apparatus, on or in a wall, such as a ceiling, wherein the assembly comprises:
- a housing (100) mountable in the wall,
- a socket module (200) which is fixable in the housing and is removable from the housing from the side of the electrical apparatus, wherein the socket module is provided with electrical socket contacts (210a, 210b) and, connected thereto, electrical connection elements (220) which, in the mounted position, protrude into the wall and which preferably protrude from the housing or are accessible from the outside of the housing, said electrical connection elements (220) being configured to be electrically connected to the mains electricity,
- a plug module (300) which can be plugged into the socket module, wherein the plug module is provided with electrical plug contacts (310a, 310b), wherein in the plugged state the socket contacts make contact with the plug contacts, which plug module is fixable to the electrical apparatus.

2. Assembly according to claim 1, wherein the housing comprises a tube (110) in which the socket module is receivable, and the tube is provided with an outward protruding flange (120, 125) which is fixable against the wall and/or can be plastered into the wall.

3. Assembly according to claim 2, wherein the flange (120) is provided with holes (121) for receiving screws and/or with holes (122) for receiving plaster.

4. Assembly according to any one of the foregoing claims 1-3, wherein the socket module (200) is fixable in the housing (100) using a spring (250), wherein the spring is removable from the side of the electrical apparatus; or
wherein the socket module (200) is fixable in the housing (100) by clips or by clamps or by a bayonet connection, wherein the socket module is preferably provided with clipping elements (255) or clamping elements or bayonet elements (260); or
wherein the socket module (200) is provided with an external screw thread and the housing (100) is provided with an internal screw thread intended for co-action with the external screw thread.

5. Assembly according to any one of the foregoing claims, wherein the socket contacts (210a, 210b) and the plug contacts (310a, 310b) are cylindrical.

6. Assembly according to any one of the foregoing claims, wherein the plug module (300) is provided on its outer periphery with a substantially barrel-shaped spring element (330) and an inner wall of the socket module is configured to hold the barrel-shaped spring element mechanically, wherein the barrel-shaped spring element optionally also functions as one of the electrical plug contacts (310a, 310b).

7. Assembly according to any one of the foregoing claims, wherein the connection elements (220) of the socket module comprise at least two snap-in connectors (225), which are each configured to clampingly receive an outer end of an electric wire.

8. Assembly according to any one of the foregoing claims, wherein the connection elements (220) of the socket module comprise at least two electric wires (226).

9. Assembly according to any one of the foregoing claims, wherein the socket module comprises a substantially tubular housing and, received therein, a connector module, which connector module is provided with the socket contacts at an end situated in the housing and is provided with the connection elements at another end situated outside the housing.

10. Assembly according to any one of the foregoing claims, wherein the housing, the socket module and the plug module are substantially cylindrical.

11. Assembly according to any one of the foregoing claims, further comprising a lighting apparatus connected to the plug module, preferably a lighting apparatus with at least one light-emitting diode, LED, preferably an array of light-emitting diodes;
optionally further comprising a converter which is configured to convert a supply voltage into one or more current or voltage signals suitable for powering the lighting apparatus; wherein preferably the converter is provided in the socket module.

12. Assembly according to claim 11, wherein the converter is configured to receive one or more control signals, such as a dimming signal or a light colour control signal, and to control the current or voltage signal in accordance with the one or more control signals, and wherein the electrical socket contacts (210a, 210b) comprise at least three electrical socket contacts (210a, 210b) and the electrical plug contacts (310a, 310b) comprise at least three electrical plug contacts (310a, 310b).

13. Assembly for fixing or hanging an electrical apparatus, such as a lighting apparatus, on or in a wall, such as a ceiling, wherein the assembly comprises:
- a socket module (200) mountable in the wall and having an outward protruding flange (270), optionally provided with screw holes (271), which is fixable against the wall from the side of the electrical apparatus, wherein the socket module is provided with electrical socket contacts (210a, 210b) and, connected thereto, electrical connection elements (220) which, in the mounted position, protrude into the wall and are configured to be electrically connected to the mains electricity,
- a plug module (300) which can be plugged into the socket module, wherein the plug module is provided with electrical plug contacts (310a, 310b), wherein in the plugged state the socket contacts make contact with the plug contacts, which plug module is fixable to the electrical apparatus.

14. Assembly according to claim 13, wherein the plug module (300) is provided on its outer periphery with a substantially barrel-shaped spring element (330) and an inner wall of the socket module is configured to hold the barrel-shaped spring element mechanically, wherein the barrel-shaped spring element optionally also functions as one of the electrical plug contacts.

15. Assembly according to claim 13 or 14, wherein the connection elements of the socket module comprise at least two snap-in connectors, which are each configured to clampingly receive an outer end of an electric wire; and/or
wherein the socket module comprises a substantially tubular housing and, received therein, a connector module, which connector module is provided with the socket contacts at an end situated in the housing and is provided with the connection elements at another end situated outside the housing; and/or wherein the socket module and the plug module are substantially cylindrical; and/or
wherein the socket contacts (210a, 210b) and the plug contacts (310a, 310b) are cylindrical; and/or
comprising a lighting apparatus connected to the plug module, preferably a lighting apparatus with at least one light-emitting diode, LED, preferably an array of light-emitting diodes; optionally further comprising a converter which is configured to convert a supply voltage into one or more current or voltage signals suitable for powering the lighting apparatus; wherein preferably the converter is provided in the socket module.
